# EUROPEAN PATENT APPLICATION

(11) **EP 3 319 290 A1**
(43) Date of publication of application: **09.05.2018**
(21) Application number: 16788626.6
(22) Date of filing: 18.04.2016
(51) Int. Cl.: H04L 29/06, H04W 12/08

(54) **METHOD AND SYSTEM FOR ACCESSING HOME CLOUD SYSTEM BY CLOUD TERMINAL, AND CLOUD ACCESS CONTROL DEVICE**

(30) Priority: 02.07.2015 CN 201510391888
(71) Applicant: Huizhou TCL Mobile Communication Co., Ltd., Huizhou, Guangdong 516006 (CN)
(72) Inventor: YANG, Yan, Huizhou Guangdong 516006 (CN)
(74) Representative: ZHAOffice SPRL
(86) International application number: PCT/CN2016/079548
(87) International publication number: WO 2017/000629

(57) **Abstract**

A method for a cloud terminal to access a household cloud system is provided, the method including: receiving, at the household cloud system, an access-request message from the cloud terminal; determining, by the household cloud system, whether the access-request message contains a preset message specification, the preset message specification including an access mode, requested contents, and an authentication identification (ID) code; if the access-request message contains the preset message specification, determining whether the authentication ID code in the access-request message is consistent with a preset ID code in the household cloud system; and if the they are consistent, allowing the cloud terminal to access the household cloud system. An associated cloud-access control device and household cloud system are also provided. Thus, the present disclosure can avoid the malicious access of a cloud terminal to the household cloud system, thereby improving the security of the household cloud system.

## Description

### FIELD

The present disclosure generally relates to communications technology, and more particularly relates to methods and systems for a cloud terminal to access a household cloud system, and associated cloud-access control devices.

### BACKGROUND

With the increasing popularity of intelligent mobile terminals and electronic devices, the Internet continues to evolve. As various mobile terminals have found applications in people's lives, the sharp increase in amounts of information has posed a great challenge to the storage capacity of these mobile terminals, which has led to the cloud storage revolution. By cloud technology, a cloud can be divided into multiple smaller clouds of different latitudes, where the household cloud is an important latitude contributing to the popularity of the personal cloud. The household cloud takes the host computer as the core, to which accessing devices in the household can be connected via a wired or wireless network built up in the household. The household cloud can further be connected to the Internet via broadband, so the household cloud can be viewed as a private cloud established for the household alone. However, the networking of these household devices is complicated, the entertainment a single device can provide is monotonous, the security of private information concerns people, and the devices are miscellaneous to be well controlled. All these problems are emergent in the household in the mobile internet 3C fusion era. The household cloud can solve these problems to bring users more convenient and colorful household lives.

However, the prior art methods of the accessing the household cloud are unsophisticated, threatening the security of the household cloud.

### SUMMARY

The present disclosure provides methods and systems for a cloud terminal to access a household cloud system, and associated cloud-access control devices, aimed at solving the problem in the prior art that the access of the cloud terminal to the household cloud system tends to cause security problems on the household cloud system.

There is provided a method for a cloud terminal to access a household cloud system, the method comprising: receiving, at the household cloud system, an access-request message from the cloud terminal; determining, by the household cloud system, whether the access-request message contains a preset message specification, the preset message specification comprising an access mode, requested contents, and an authentication identification (ID) code; if the access-request message contains the preset message specification, determining whether the authentication ID code in the access-request message is consistent with a preset ID code in the household cloud system; and if the authentication ID code in the access request information is consistent with the preset ID code, allowing the cloud terminal to access the household cloud system.

The authentication ID code may comprise a terminal ID code and an authentication code, and determining whether the authentication ID code is consistent with the preset ID code comprises: determining whether the authentication code is consistent with a preset authentication code in the household cloud system; and if the authentication code is consistent with the preset authentication code, determining whether the terminal ID code is consistent with a preset terminal ID code in the household cloud system.

The method may further comprise, if the terminal ID code is inconsistent with the preset terminal ID code in the household cloud system: detecting whether the household cloud system is enabled to receive an unfamiliar cloud terminal; if the household cloud system is enabled to receive an unfamiliar cloud terminal, detecting whether the household cloud system has activated a direct reception service; and if the household cloud system has activated the direct reception service, allowing the cloud terminal to access the household cloud system.

If the household cloud system has not activated the direct reception service, then controlling whether to allow the cloud terminal to access the household cloud system.

If the household cloud system has activated the direct reception service, then the method may further comprise, after the cloud terminal is allowed to access the household cloud system: synchronizing data between the household cloud system and the cloud terminal.

The authentication code may be defined by a user of the cloud terminal, and the user-defining process may comprise: receiving, at the household cloud system, an authentication code the user enters from the cloud terminal; determining, by the household cloud system, whether an authentication code already exists in the household cloud system; if no authentication code exists in the household cloud system, taking the authentication code as the preset authentication code.

The method may further comprise, if there exists an authentication code in the household cloud system: sending a prompt to the cloud terminal to query whether to reset the authentication code; and if the user chooses to reset the authentication code, entering a password of the cloud terminal for resetting the authentication code.

There is also provided a cloud-access control device that comprises a receiving module, a first determination module, a second determination module, and an accessing module. The receiving module may be configured to receive an access-request message from the cloud terminal. The first determination module may be configured to determine whether the access-request message contains a preset message specification, the preset message specification comprising an access mode, requested contents, and an authentication ID code; the second determination module may be configured to, if the access-request message contains the preset message specification, determine whether the authentication ID code in the access-request message is consistent with a preset ID code in the household cloud system; and the accessing module may be configured to, if the authentication ID code is consistent with the preset ID code, allow the cloud terminal to access the household cloud system.

The second determination module may comprise an authentication-code determination unit and a terminal-ID-code determination unit, the authentication-code determination unit may be configured to determine whether an authentication code is consistent with a preset authentication code in the household cloud system; and the terminal-ID-code determination unit may be configured to, if the authentication-code is consistent with the preset authentication code, determine whether a terminal ID code is consistent with a preset terminal ID code in the household cloud system.

The cloud-access control device may further comprise a first detecting module and a second detecting module, the first detecting module being configured to, if the terminal ID code is inconsistent with the preset terminal ID code in the household cloud system, detect whether the household cloud system in enabled to receive an unfamiliar cloud terminal; the second detecting module being configured to, if the first detecting module detects that the household cloud system is enabled to receive an unfamiliar cloud terminal, detect whether the household cloud system has activated a direct reception service.

The cloud-access control device may further comprise a selecting module configured to, if the second detecting module detects that the household cloud system has not activated the direct reception service, control whether to allow the cloud terminal to access the household cloud system.

The cloud-access control device may further comprise a synchronization module configured to synchronize data between the household cloud system and the cloud terminal after the cloud terminal is allowed to access the household cloud system.

There is also provided a household cloud system that comprises at least one cloud terminal and a cloud-access control device, the cloud-access control device comprising a receiving module, a first determination module, a second determination module, and an accessing module. The receiving module may be configured to receive an access-request message from the cloud terminal. The first determination module may be configured to determine whether the access-request message comprises a preset message specification, the preset message specification comprising an access mode, requested contents, and an authentication ID code. The second determination module may be configured to, if the access-request message contains the preset message specification, determine whether the authentication ID code in the access-request message is consistent with a preset ID code in the household cloud system. The accessing module may be configured to, if the authentication ID code in the access-request message is consistent with the preset ID code, allow the cloud terminal to access the household cloud system.

The second determination module may comprise an authentication-code determination unit and a terminal-ID-code determination unit. The authentication-code determination unit may be configured to determine whether an authentication code is consistent with a preset authentication code in the household cloud system. The terminal-ID-code determination unit may be configured to, if the authentication code is consistent with the preset authentication code, determine whether a terminal ID code is consistent with a preset terminal ID code in the household cloud system.

The cloud-access control device may further comprise a first detecting module and a second detecting module, the first detecting module being configured to, if the terminal ID code is inconsistent with the preset terminal ID code, detect whether the household cloud system is enabled to receive an unfamiliar cloud terminal; and the second detecting module being configured to, if the first detecting module detects that the household cloud system is enabled to receive an unfamiliar cloud terminal, detect whether the household cloud system has activated a direct reception service.

The cloud-access control device may further comprise a selecting module configured to, if the second detecting module detects that the household cloud system has not activated the direct reception service, control whether to allow the cloud terminal to access the household cloud system.

The cloud-access control device may further comprise a synchronization module configured to synchronize data between the household cloud system and the cloud terminal after the cloud terminal is allowed to access the household cloud system.

According to the above-described method and system for a cloud terminal to access a household cloud system and associated cloud-access control device, the household cloud system first determines the format of the access-request message from the cloud terminal, then verifies an authentication ID code in the access-request message if the format meets the specification, and allows the cloud terminal to access the household cloud system only after the verification is successful. Therefore, compared to the prior art where the security of the household cloud system is threatened due to the simple verification method used, embodiments of the present disclosure can avoid the malicious access of a cloud terminal to the household cloud system, thereby improving the security of the household cloud system.

### BRIEF DESCRIPTION OF THE DRAWINGS

To better illustrate the implementations of the present disclosure, the attached drawings necessary for description of the implementations will be described briefly hereinbelow. Obviously, these attached drawings only illustrate some embodiments of the disclosure, and those of ordinary skill in the art can further obtain other drawings based on these attached drawings without making inventive efforts.
FIG. 1 is a flowchart illustrating a first embodiment of a method for a cloud terminal to access a household cloud system according to the disclosure.
FIG. 2 is a flowchart illustrating a second embodiment of the method for a cloud terminal to access a household cloud system according to the disclosure.
FIG. 3 is a flowchart illustrating the process of setting an authentication code according an embodiment of the disclosure.
FIG. 4 is a block diagram illustrating a first embodiment of a cloud-access control device according to the disclosure.
FIG. 5 is a block diagram illustrating a second embodiment of the cloud-access control device according to the disclosure. FIG. 6 is a block diagram illustrating a household cloud system according to an embodiment of the disclosure.

### DETAILED DESCRIPTION

Hereinbelow, the implementations of the present disclosure will be described in definite and comprehensive details with reference to the attached drawings. Obviously, the embodiments described herein are only some but not all embodiments of the present disclosure. All other embodiments that can be devised by those of ordinary skill in the art on the basis of the embodiments described herein and without making inventive efforts shall all fall in the scope of the present disclosure.

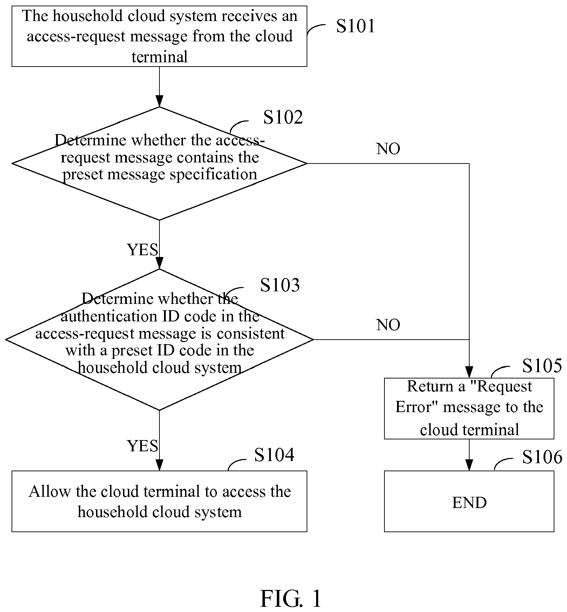

Referring to FIG. 1, a flowchart is depicted illustrating a first embodiment of a method for a cloud terminal to access a household cloud system according to the disclosure. The method according to this embodiment may comprise the following blocks.

In S101, the household cloud system may receive an access-request message from the cloud terminal.

In particular, the cloud terminal may send the access-request message to a cloud-access control device in a wired or wireless manner. For example, if the cloud terminal and the cloud-access control device are located within a same local area network (LAN) and are close to each other, the access-request message may be transmitted in a wireless manner, such as Wi-fi, Bluetooth, or infrared; or the cloud terminal may be connected to the cloud-access control device via a transmission line through which the access-request message can be transported. Alternatively, if the cloud terminal and the cloud-access control device are located within a wide area network (WAN), then the access-request message may be sent via a wireless cellular network to which the cloud terminal is connected.

In S102, the household cloud system may determine whether the access-request message contains a preset message specification, where the preset message specification may comprise an access mode, requested contents, and an authentication identification (ID) code, and if there is contained the preset message specification, the method may proceed to block S103; otherwise, to block S105.

The access request message may need to include at least the aforesaid three pieces of information, i.e., the access mode, the requested contents, and the authentication ID code, to meet the preset message specification. In other embodiments, of course, the user can add other contents to the preset message specification, which are not limited herein.

In S103, the household cloud system may determine whether the authentication ID code in the access-request message is consistent with a preset ID code in the household cloud system, and if they are consistent, the method may proceed to block S104; otherwise, to block S105.

If the access-request message meets the preset message specification, then it may further be determined whether the authentication ID code in the access-request message is consistent with the preset ID code provided in the household cloud system. The preset ID code may be a set of authentication ID codes the user established beforehand in the system. As such, the security of the household cloud system can be enhanced due to the user-defined nature and uniqueness of the preset ID code. The authentication ID codes may comprise a terminal ID code and an authentication code, where the terminal ID code may be an International Mobile Equipment Identification (IMEI) number (i.e., a symbol for identifying the mobile equipment) or a Mobile Equipment Identifier (MEID). The Mobile Equipment Identifier (MEID) is an identification (ID) code for a CDMA mobile phone, and is unique for each CDMA mobile phone or cellular tablet computer. The authentication code can be user-defined, and may comprise any variable combination of numbers, letters, or characters, the type of input data and encoding format thereof are not limited in the disclosure, however.

In S104, the cloud terminal may be allowed to access the household cloud system.

In S105, the household cloud system may return a "Request Error" message to the cloud terminal.

If the access-request message does not meet the preset message specification or if the authentication ID code is inconsistent with the preset ID code, the cloud-access control device may return a message such as the "Request Error" message to the cloud terminal. In other embodiments, of course, the household cloud system may return a "Request Failure" message, where no limitation is made to the returned message in the disclosure. Further, the reason why the request fails may be analyzed and returned to the cloud terminal to prompt the cloud terminal user to make correction.

In S106, end.

According to the method for the cloud terminal to access the household cloud system described in the above embodiment, the format of the access-request message is first examined. If the format meets the preset specification, then the authentication ID code will be compared against a preset ID code, and if the authentication ID code is consistent with the preset ID code, the cloud terminal would be allowed to access the household cloud system. Therefore, compared to the prior art where the security of the household cloud system is threatened due to the simple verification method used, the present embodiment can avoid the malicious access of a cloud terminal to the household cloud system, improving the security of the household cloud system.

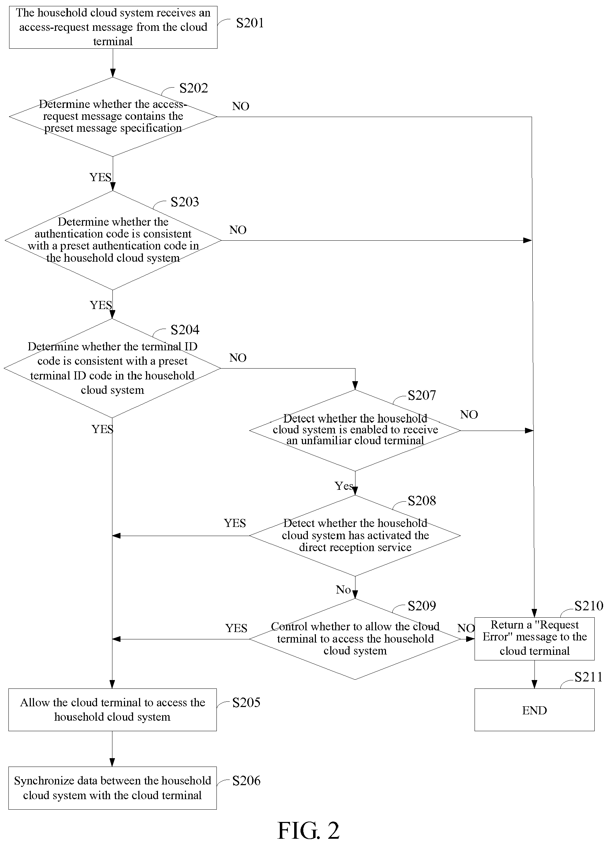

Referring now to FIG. 2, a flowchart is depicted illustrating a second embodiment of the method for a cloud terminal to access a household cloud system according to the disclosure. The method according to the present embodiment may comprise the following blocks.

In S201, the household cloud system may receive an access-request message from the cloud terminal.

The cloud terminal may transmit the access-request message to a cloud-access control device in a wired or wireless manner. For example, if the cloud terminal and the cloud-access control device are located within a same LAN and are close to each other, then the access-request message may be sent in a wireless manner, such as Wi-fi, Bluetooth, or infrared. Alternatively, the cloud terminal may be connected to the cloud-access control device via a transmission line through which the access-request message can be transported. Alternatively, if the cloud terminal and the cloud-access control device are located within a WAN, then the access-request message may be sent via a wireless cellular network to which the cloud terminal is connected.

In S202, the household cloud system may determine whether the access-request message contains a preset message specification, and if there is contained the preset message specification, the method may proceed to block S203; to block S210.

The access-request message may need to include at least three pieces of information, i.e., an access mode, the requested contents, and an authentication ID code, to meet the preset message specification. In other embodiments, of course, the user can add other contents to the preset message specification, which are not limited herein.
The access mode may include wireless or wired access mode. The requested contents may comprise requested data synchronization with the household cloud system or requested data transmission with other cloud devices in the household cloud system, and are not limited herein.

In S203, the household cloud system may determine whether the authentication code is consistent with an authentication code preset in the household cloud system, and if they are consistent, the method may proceed to block S204; otherwise, to block S210.

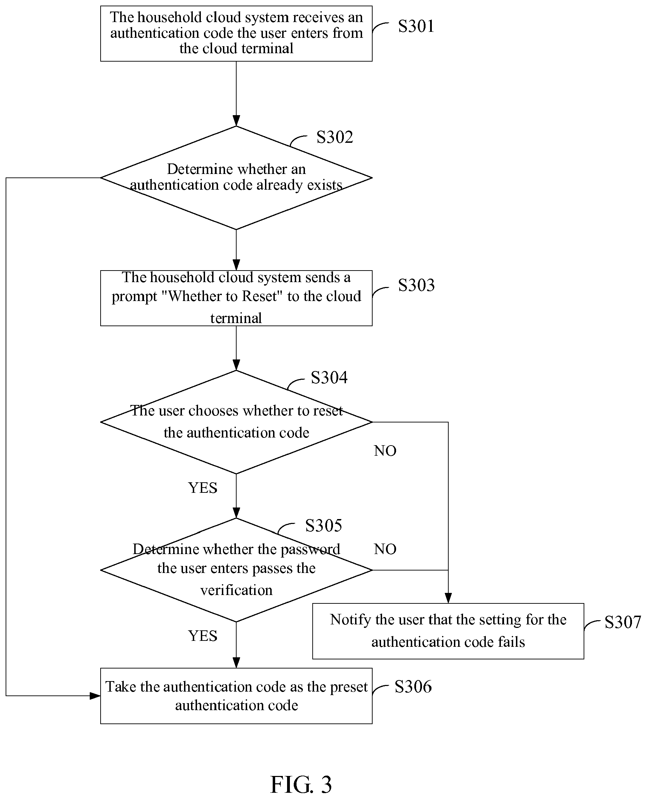

The authentication code can be user-defined (i.e., defined by the user), and may be any variable combination of numbers, letters, or characters, the type of the input data and encoding format thereof are not limited in the disclosure, however. For example, the user may set the authentication code by the following process. Referring to FIG. 3, a flowchart is depicted illustrating the process of setting an authentication code according to an embodiment of the disclosure, the process comprising the following steps.

In S301, the household cloud system may receive an authentication code the user inputs from the cloud terminal.

The cloud terminal may provide an application layer for the user to set the authentication code.

In S302, it may be determined whether there already is set an authentication code in the household cloud system, and if yes, the process may continue to step S303; otherwise, to step S306.

In S303, a prompt message "Whether to Reset" may be sent to the cloud terminal.

In S304, the user may choose whether to reset. If the user chooses to reset, then the process may continue to step S305; otherwise, to step S307.

In S305, it may be determined whether the password verification is successful, and if it is successful, the process may proceed to step S306; otherwise, to step S307.

To improve the security of the household cloud system, password verification may further be performed if the user wants to reset the authentication ID code, and the password can be used to alter settings of the whole system. At the first time of use, the system default password may be 000000, 123456, or the like, but the present disclosure is not limited thereto, which means the initial password may assume any other values and can also be defined by the user.

In S306, the household cloud system may take the authentication code as the preset authentication code.

After successfully setting the authentication code, the authentication code may be taken as the preset authentication code for later verification for the connection between the cloud terminal and the household cloud system.

In S307, the cloud terminal may notify the user that the setting of the authentication code fails.

In particular, if the user chooses not to reset the authentication code or the password verification fails, then the user may be prompted that the setting of the authentication code fails.

In S204, it may be determined whether the terminal ID code is consistent with a preset terminal ID code in the household cloud system, and if is yes, the method may proceed to block S205; otherwise, to block S207.

The terminal ID code may be an IMEI number (i.e., a symbol for identifying the mobile equipment) or an MEID. The MEID is an ID code for a CDMA mobile phone, and is unique for each CDMA mobile phone or cellular tablet computer. The terminal ID code is unique and cannot be defined by the user.

In S205, the cloud terminal may be allowed to access the household cloud system.

In S206, data may be synchronized between the household cloud system and the cloud terminal.

After the cloud terminal sends the access-request message, the requested content may be sent in the form of a request code, and the household cloud system may operate according to the corresponding meaning of the request code after receiving the request code. For example, the household cloud system may perform operations according to the following table.

| Request code | Meaning |
|---|---|
| 01 | Acquiring data from the cloud |
| 02 | Synchronizing data to the cloud |

In S207, it may be detected whether the household cloud system is enabled to receive an unfamiliar cloud terminal, and if yes, the method may proceed to block S208; otherwise, to block S210.

In S208, it may be detected whether the household cloud system has activated a direct reception service, and if yes, the method may continue to block S205; otherwise, to block S209.

Whether the household cloud system is enabled to receive an unfamiliar cloud terminal in S207 and whether the household cloud system has activated a direct reception service in S208 may be set via the cloud-access control device of the household cloud system. For example:

| Menu items | Meaning |
|---|---|
| Device ID 1 | Inputting device ID of device 1 |
| Device ID 2 | Inputting device ID of device 2 |
| Device ID 3 | Inputting device ID of device 3 |
| Device ID 4 | Inputting device ID of device 4 |
| Whether to to receive a request from an unfamiliar device | If enabled to receive a request from an unfamiliar device, the household cloud system can receive the request from the unfamiliar device, otherwise if not enabled to receive a request from an unfamiliar device, then the household cloud system would not receive the request sent by the strange device. Since the activation of this function lowers the security, the user is suggested not to activate the function. If the user has activated the function, then enter a sub-setting-menu to decide whether to receive the request directly |
| Whether to receive directly | If the system is enabled to receive a request from an unfamiliar device, options are further provided for the user whether to receive the request directly or to prompt the cloud-access control device, the user is not suggested to choose to receive the request directly, and if the user chooses to receive the request directly, then a corresponding warning message should be provided. |

The aforesaid ID represents the authentication ID code, but the device ID code needs not to be entered by the user manually.

In S209, a choice may be made as to whether to allow the cloud terminal to access the household cloud system. If the cloud terminal is allowed, then the method may continue to block S205; otherwise, to block S210.

The user may choose manually to allow the cloud terminal to directly access the household cloud system in some special circumstances, e.g., if a member who belongs to the household cloud system changes his terminal device and has not yet updated the new device to the household cloud system, or if a friend who visits the household desires to join the household cloud system to share the relevant contents.

In S210, the household cloud system may return a "Request Error" message to the cloud terminal.

Correspondences between some preset error codes and descriptions of the error codes may be set in the cloud-access control device in advance. For example, when the "Request Error" message is received, the corresponding description may be retrieved according to the error code and then sent to the cloud terminal to prompt the user, thus the user can get the error details and perform suitable correction. The correspondences between the error codes and the descriptions of the error codes are shown in the following table.

| Error codes | Descriptions |
|---|---|
| 01 | The access-request message does not meet the specification |
| 02 | Option to receive a content synchronization request from an unfamiliar device is not activated, or the device is an unfamiliar device |
| 03 | The cloud-access control will not receive data |

In S211: End.

According to the method for the cloud terminal to access the household cloud system described in the above embodiment, the format of the access-request message is first examined. If the format meets the preset specification, and if the authentication ID code is consistent with the preset ID code, the cloud terminal would be allowed to access the household cloud system. Therefore, compared to the prior art where the security of the household cloud system is threatened due to the simple verification method used, the present embodiment can avoid the malicious access of a cloud terminal to the household cloud system, improving the security of the household cloud system. Furthermore, the method also allows the user to set other access modes according to his personal requirements, which brings convenience to the cases where the member of the household changes his/her terminal device or where a friend who visits the household wants to join the household cloud system.

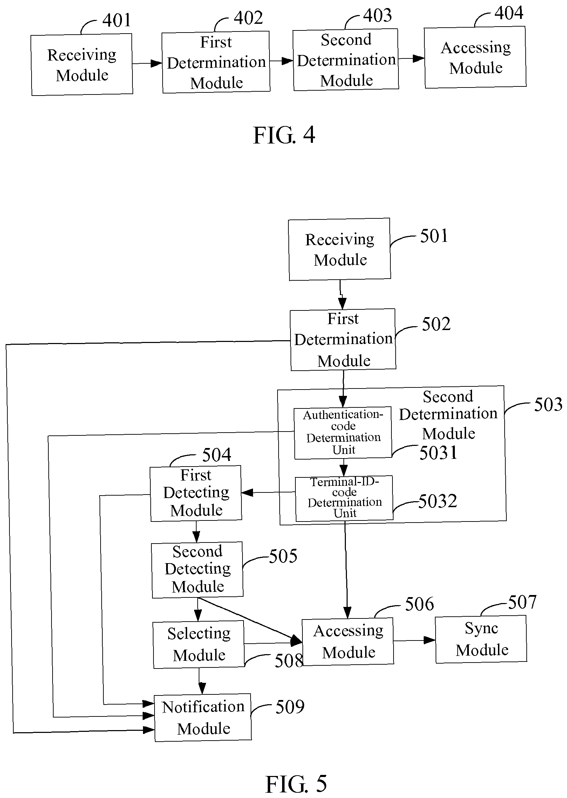

Referring to FIG. 4, a block diagram is depicted illustrating a first embodiment of a cloud-access control device according to the disclosure. The cloud-access control device may be used for controlling the cloud terminal to access the household cloud system. The cloud-access control device may comprise a receiving module 401, a first determination module 402, a second determination module 403, and an accessing module 404.

The receiving module 401 may be configured to receive an access-request message from the cloud terminal.

The cloud terminal may send the access-request message to the cloud-access control device in a wired or wireless manner. For example, if the cloud terminal and the cloud-access control device are located within a same LAN and are close to each other, the access-request message may be sent in a wireless manner, such as Wi-fi, Bluetooth, or infrared; or the cloud terminal may be connected to the cloud-access control device via a transmission line through which the access-request message can be transported. Alternatively, if the cloud terminal and the cloud-access control device are located within a WAN, then the access-request message may be sent via a wireless cellular network to which the cloud terminal is connected.

The first determination module 402 may be configured to determine whether the access-request message contains a preset message specification, where the preset message specification may comprise an access mode, requested contents, and an authentication ID code.

The second determination module 403 may be configured to, if the access-request message contains the preset message specification, determine whether the authentication ID code in the access-request message is consistent with a preset ID code in the household cloud system.

The accessing module 404 may be configured to, if the authentication ID code in the access-request message is consistent with the preset ID code in the household cloud system, allow the cloud terminal to access the household cloud system.

After receiving the access-request message from the cloud terminal, the cloud-access control device may allow the access of the cloud terminal after two dependent determinations are performed via the first determination module and the second determination module. Therefore, compared to the prior art where the security of the household cloud system is threatened due to the simple verification method used, the present embodiment can avoid the malicious access of a cloud terminal to the household cloud system, thereby improving the security of the household cloud system.

Referring now to FIG. 5, a block diagram is depicted illustrating a second embodiment of the cloud-access control device according to the disclosure. The cloud-access control device may comprise a receiving module 501, a first determination module 502, a second determination module 503, a first detecting module 504, a second detecting module 505, an accessing module 506, a synchronization module 507, a selecting module 508 and a notification module 509.

The receiving module 501 and the first determination module 502 are similar as those described in the previous embodiment, and thus will not be further described herein.

The second determination module 503 may comprise an authentication-code determination unit 5031 and a terminal-ID-code determination module 5032. The authentication ID code may comprise an authentication code and a terminal ID code. The authentication-code determination module 5031 may be configured to determine whether the authentication code is consistent with a preset authentication code in the household cloud system, and the terminal-ID-code determination module 5032 may be configured to, if the authentication code is consistent with the preset authentication code in the household cloud system, determine whether the terminal ID code is consistent with a preset terminal ID code in the household cloud system.

The first detecting module 504 may configured to, if the terminal ID code is inconsistent with the preset terminal ID code, detect whether the household cloud system is enabled to receive an unfamiliar cloud terminal. If detect the household cloud system is not enabled to receive an unfamiliar cloud terminal, then the notification module 509 may be configured to send a corresponding notification to the cloud terminal.

The second detecting module 505 may be configured to, if the first detection module detects that the household cloud system is enabled to receive an unfamiliar cloud terminal, detect whether the household cloud system has activated a direct reception service. If the household cloud system has activated the direct reception service, then the accessing module 506 may be configured to allow the cloud terminal to access the household cloud system.

The accessing module 506 may be configured to allow the cloud terminal to access the household cloud system if the cloud terminal satisfies certain conditions. The conditions may be that, for example, the terminal-ID-code determination module 5032 determines the terminal ID code is consistent with the preset terminal ID code in the household cloud system, and the second detection module 505 detects that the household cloud system has activated the direct reception service; or the user chooses to allow the access directly using the selecting module 508.

The synchronization module 507 may be configured to synchronize data between the household cloud system and the cloud terminal after the cloud terminal is allowed to access the household cloud system. In the synchronization, the cloud terminal may synchronize its data to the household cloud system or may acquire data from the household cloud system.

The selecting module 508 may be configured to, if the second detection module 505 detects the household cloud system has not activated the direct reception service, control whether to allow the cloud terminal to access the household cloud system. By the selecting module 508, the cloud-access control device can be adapted to some special circumstances, e.g., where a member that belongs to the household cloud system changes his terminal device and has not yet updated the new device to the household cloud system, or where a friend who visits the household wants to join the household cloud system to share the relevant contents.

The notification module 509 may be configured to, when the aforesaid determinations are no, prompt the user to make correction or stop requesting access. The reason why the aforesaid determinations are no may comprise that the access-request message does not meet the specification, the household cloud system is not enabled to receive a content synchronization request of an unfamiliar device, the device is an unfamiliar device, or the cloud-access control device will not receive data.

Specific implementation of modules of the first embodiment and the second embodiment of the cloud-access control device has been detailed in the embodiments corresponding to FIG. 1 to FIG. 3, and thus will not be further described herein.

According to the present embodiment, after the cloud-access control device receives the access-request message from the cloud terminal, it may allow the access of the cloud terminal only after two determinations are made using the first determination module and the second determination module. Therefore, compared to the prior art where the security of the household cloud system is threatened due to the simple verification method used, the present embodiment can avoid the malicious access of a cloud terminal to the household cloud system, thus improving the security of the household cloud system. Further, the user can be allowed the access by the selecting module, which brings convenience to the cases where the household member changes his/her terminal device or where a friend who visits the household wants to join the household cloud system.

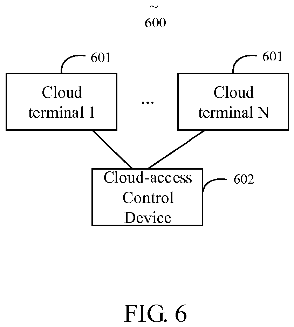

Referring to FIG. 6, a block diagram is depicted illustrating an embodiment of a household cloud system according to the disclosure. The household cloud system may comprise at least one cloud terminal 601 and a cloud-access control device 602. References may be made to the aforesaid embodiments to illustrate the specific structure and implementation of the cloud-access control device 602, which will not be described herein again.

The household cloud system may allow the cloud terminal to access the household cloud system only after the cloud-access control device 602 has made two successive determinations as to the access-request message sent by the cloud terminal. Therefore, compared to the prior art where the security of the household cloud system is threatened due to the simple verification method used, the present embodiment can avoid the malicious access of a cloud terminal to the household cloud system, thereby improving the security of the household cloud system.

The above description only depicts some exemplary embodiments of the disclosure, which however are not intended to limit the scope of the disclosure. Any equivalent structural or flow modifications made based on the specification and the accompanying drawings of the present disclosure, or any direct or indirect applications of the present disclosure on any other related domains shall all be fall in the scope of the present disclosure.

## Claims

1. A method for a cloud terminal to access a household cloud system, comprising:
receiving, at the household cloud system, an access-request message from the cloud terminal;
determining, by the household cloud system, whether the access-request message contains a preset message specification, the preset message specification comprising an access mode, requested contents, and an authentication identification (ID) code;
when the access-request message contains the preset message specification, determining, by the household cloud system, whether the authentication ID code in the access-request message is consistent with a preset ID code in the household cloud system; and
when the authentication ID code is consistent with the preset ID code, allowing the cloud terminal to access the household cloud system.

2. The method according to claim 1, wherein the authentication ID code comprises a terminal ID code and an authentication code, and the determining whether the authentication ID code is consistent with the preset ID code comprises:
determining whether the authentication code is consistent with a preset authentication code in the household cloud system; and
when the authentication code is consistent with the preset authentication code, determining whether the terminal ID code is consistent with a preset terminal ID code in the household cloud system.

3. The method according to claim 2, further comprising, if the terminal ID code is inconsistent with the preset terminal ID code in the household cloud system:
detecting whether the household cloud system is enabled to receive an unfamiliar cloud terminal;
when the household cloud system is enabled to receive an unfamiliar cloud terminal, detecting whether the household cloud system has activated a direct reception service; and
when the household cloud system has activated the direct reception service, allowing the cloud terminal to access the household cloud system; otherwise when the household cloud system has not activated the direct reception service, controlling whether to allow the cloud terminal to access the household cloud system.

4. The method according to claim 2, wherein the authentication code is defined by a user of the cloud terminal, and the user-defining process comprises:
receiving, at the household cloud system, an authentication code the user enters from the cloud terminal;
determining, by the household cloud system, whether an authentication code already exists in the household cloud system;
when no authentication code does exists in the household cloud system, taking the authentication code as the preset authentication code; and
when there exists the authentication code in the household cloud system:
sending a prompt to the cloud terminal to query whether to reset the authentication code; and
when the user chooses to reset the authentication code, entering a password of the cloud terminal for resetting the authentication code.

5. A cloud-access control device, comprising:
a receiving module configured to receive an access-request message from a cloud terminal;
a first determination module configured to determine whether the access-request message contains a preset message specification, the preset message specification comprising an access mode, request contents, and an authentication ID code;
a second determination module configured to, when the access-request message contains the preset message specification, determine whether the authentication ID code in the access-request message is consistent with a preset ID code in the household cloud system; and
an accessing module configured to, when the authentication ID code in the access-request message is consistent with the preset ID code in the household cloud system, allow the cloud terminal to access the household cloud system.

6. The cloud-access control device according to claim 5, wherein the second determination module comprises:
an authentication-code determination unit configured to determine whether an authentication code is consistent with a preset authentication code in the household cloud system; and
a terminal-ID-code determination unit, being configured to, if the authentication code is consistent with the preset authentication code, determine whether a terminal ID code is consistent with a preset terminal ID code in the household cloud system.

7. The cloud-access control device according to claim 6, further comprising:
a first detecting module configured to, when the terminal ID code is inconsistent with the preset terminal ID code in the household cloud system, detect whether the household cloud system in enabled to receive an unfamiliar cloud terminal; and
a second detecting module configured to, when the first detecting module detects that the household cloud system is enabled to receive an unfamiliar cloud terminal, detect whether the household cloud system has activated a direct reception service.

8. The cloud-access control device according to claim 7, further comprising:
a selecting module configured to, when the second detecting module detects that the household cloud system does not activate the direct reception service, control whether to allow the cloud terminal to access the household cloud system.

9. The cloud-access control device according to claim 5, further comprising:
a synchronization module configured to synchronize data between the household cloud system and the cloud terminal after the cloud terminal is allowed to access the household cloud system.

10. A household cloud system comprising at least one cloud terminal and a cloud-access control device, the cloud-access control device comprising:
a receiving module configured to receive an access-request message from the cloud terminal;
a first determination module configured to determine whether the access-request message contains a preset message specification, the preset message specification comprising an access mode, requested contents, and an authentication ID code;
a second determination module configured to, when the access-request message contains the preset message specification, determine whether the authentication ID code in the access-request message is consistent with a preset ID code in the household cloud system; and
an accessing module configured to, when the authentication ID code in the is consistent with the preset ID code, allow the cloud terminal to access the household cloud system.

11. The household cloud system according to claim 10, wherein the second determination module comprises:
an authentication-code determination unit configured to determine whether a authentication code is consistent with a preset authentication code in the household cloud system; and
a terminal-ID-code determination unit configured to, when the authentication code is consistent with the preset authentication code, determine whether a terminal ID code is consistent with a preset terminal ID code in the household cloud system.

12. The household cloud system according to claim 11, wherein the cloud-access control device further comprises:
a first detecting module configured to, when the terminal ID code is inconsistent with the preset terminal ID code, detect whether the household cloud system is enabled to receive an unfamiliar cloud terminal; and
a second detecting module configured to, when the first detecting module detects that the household cloud system is enabled to receive an unfamiliar cloud terminal, detect whether the household cloud system has activated a direct reception service.

13. The household cloud system according to claim 12, wherein the cloud-access control device further comprises a selecting module configured to, when the second detecting module detects that the household cloud system has not activated the direct reception service, control whether to allow the cloud terminal to access the household cloud system.

14. The household cloud system according to claim 10, wherein the cloud-access control device further comprises a synchronization module configured to synchronize data between the household cloud system with the cloud terminal after the cloud terminal is allowed to access the household cloud system.
